(19) Europäisches Patentamt
European Patent Office
Office européen des brevets

(11) **EP 4 537 663 A1**

(12) **EUROPEAN PATENT APPLICATION**
published in accordance with Art. 153(4) EPC

(43) Date of publication:
**16.04.2025 Bulletin 2025/16**

(21) Application number: 23819302.3

(22) Date of filing: **24.04.2023**

(51) International Patent Classification (IPC):
**A01N 37/50** (2006.01)    **A01N 43/38** (2006.01)
**A01N 37/44** (2006.01)

(52) Cooperative Patent Classification (CPC):
**A01N 37/44; A01N 37/50; A01N 43/38**

(86) International application number:
**PCT/ES2023/070256**

(87) International publication number:
**WO 2023/237791 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.06.2022 ES 202230491**

(71) Applicants:
• **Universidad de Valladolid**
  **47001 Valladolid (ES)**

• **Comercial Química Massó S.A.**
  **08029 Barcelona (ES)**

(72) Inventors:
• **ANDRÉS JUAN, Celia**
  **47005 Valladolid (ES)**
• **PÉREZ LEBEÑA, Eduardo**
  **47014 Valladolid**
  **(ES)**
• **VIRGILI OLIVÉ, Albert**
  **08029 Barcelona (ES)**

(74) Representative: **Ungria López, Javier**
  **Avda. Ramón y Cajal, 78**
  **28043 Madrid (ES)**

(54) **INCLUSION COMPLEX COMPRISING TRYPTOPHAN AND ARGININE; FERTILISING, BIOSTIMULANT AND ANTIMICROBIAL COMPOSITION COMPRISING SAME; PRODUCTION METHOD THEREOF; AND USE THEREOF**

(57)    In a first aspect, the invention relates to a method for producing a tryptophan and arginine inclusion complex. Furthermore, the present invention relates to said tryptophan and arginine inclusion complex, the fertiliser, biostimulant and antimicrobial composition comprising same and the production method of said composition. Lastly, the use and form of application of the composition object of the invention in agricultural crops, forestry and/or gardening is described.

FIG. 1

EP 4 537 663 A1

**Description**

**FIELD OF THE INVENTION**

The present invention falls within the general field of chemistry, more specifically organic chemistry, and is applicable in the agricultural, forestry and/or gardening sectors. More particularly, it falls within the sector of compositions that act as inducers of the auxin defence in plants and/or to control fungal and/or bacterial pests in agriculture, forestry and/or gardening.

**BACKGROUND OF THE INVENTION**

Chemistry in general and organic chemistry in particular is a field of great breadth and continuously undergoing technological progress, that can be applied to various branches of Science and Industry, and that needs to evolve to meet new legal and consumer requirements, providing solutions adapted to very strict needs. Its great potential allows the generation of new biologically active compounds that have improved activity compared to current compounds.

In agriculture, plant growth is often limited by nutrient availability and, in many cases, nitrogen is the essential limiting element. Its scarcity has detrimental effects on agricultural productivity, but its excessive fertilization can also have negative environmental effects. Improving efficiency in the use of nitrogen represents an important challenge for agriculture and it is increasingly important to research the uptake, storage and recycling mechanisms of the same and understand the interaction of these processes with the regulation of plant development and defence against stress.

In their natural environments, plants are subjected to continuous biotic stress caused by different attacks (bacteria, fungi, viruses, oomycetes and insects), that compromise the survival of the plant and its offspring. Plants have evolved over millions of years; therefore, they have developed a variety of resistance mechanisms that are constitutively expressed or can be induced after pathogen attack. Their innate immune system relies on the specific detection of proteins called pathogen-associated molecular patterns (PAMPs). Successful pathogens secrete proteins that dysregulate immunity and plants activate immunity triggered by effector proteins to counteract this. This immunity is regulated by phytohormones, which are small molecules that work in a complex network that regulates growth, development, reproduction conditions and the response of plants to environmental signals.

With regards to resistance to pathogens, the signalling pathways mediated by salicylic acid (SA) and ethylene (ET)/jasmonic acid (JA) are well described. SA positively regulates plant defence against biotrophic pathogens, which need living tissue to complete their life cycle and the ET/JA pathways are induced in resistance to pathogens that degrade plant tissue during infection.

Other hormones such as auxins and abscisic acid (ABA), originally described for regulating plant growth processes and the response to abiotic stress, are crucial players in plant-pathogen interactions. Phytohormonal pathways are linked to each other in a large and complex network; for example, ET, ABA, auxin, gibberellin and cytokinin pathways are considered hormone modulators of the SA-JA signalling backbone.

The auxins, including indole-3-acetic acid (IAA), regulate many aspects of development, such as apical dominance (tendency to show greater growth at the tip or apex of each main branch and at the tip of the main stem), root gravitropism (basipetal growth of roots, which must sink into the ground for them to function correctly and growth of the stems towards the aerial environment), the formation of root hairs and lateral roots and the development of leaves, flowers and the vasculature in general. Direct and indirect effects on the regulation of resistance responses to pathogens have also been described. Indirect effects may be caused by auxin regulation of processes associated with development, such as the architecture of the cell wall, root morphology and stomatal pattern.

Indole-3-butyric acid (IBA) is also a plant growth regulator of the auxin family and forms part of many commercial products used to facilitate the rooting of cuttings of horticultural and fruit species. A study on *Camellia sinensis* measured the effect of three different auxins (indole butyric acid, Indole acetic acid and 1-naphthaleneacetic acid) on root formation. According to the authors, indole butyric acid produced a higher root yield compared to the other auxins (Rout, G.R., "Effect of auxins on adventitious root development from single node cuttings of Camellia sinensis (L.) Kuntze and associated biochemical changes", Plant Growth Regulation 48 (2): 111-117, 2006).

One of the biosynthetic routes of auxins originates from the biosynthesis of antimicrobials derived from tryptophan, such as indole glucosinolates and camalexin. A poor response is associated with poor regulation of tryptophan derivatives (lower levels of auxin and indole glucosinolates), specifically in the roots. Overall, auxins are shown to play a central role in balancing plant resistance responses.

Tryptophan is a precursor to two important classes of plant growth regulators: (a) the typical phytohormone auxin, through dependent and independent pathways of tryptamine and (b) the indolamines melatonin and serotonin.

In contrast, the addition of tryptophan during the rooting and growth period of the plants has bioavailability problems since it is poorly soluble in water, of the order of 0.23 g/l at 0°C, 2.2 g/l at 10°C, 11.4 g/l at 25°C, 17.1 g/l at 50°C and 27.95 g/l at 75°C. Therefore, to formulate a concentrated product that can be subsequently diluted to be applied in agriculture, it is mandatory to increase its solubility, at least 20 times. There are a couple of products on the market that are able to concentrate tryptophan in fatty oils. However, these products have the difficulty of requiring the use of emulsifiers to be solubilised in water, which increases the cost of the final concentrated product and, at the same time, they deviate from solutions closer to organic agriculture.

Therefore, there is a need to develop new products that guarantee the increase in the solubility of tryptophan in water and that do not compromise the organic and/or ecological nature of the final product, by avoiding the use of chemical emulsifiers, since agriculture will progressively move towards this type of practice in crops.

Moreover, L-arginine is an important and unique amino acid in plants. In the proteins present in the seeds of different plant species, between 40 and 50% of the total nitrogen reserve is represented by arginine. This amino acid also accounts for 50% of the nitrogen in developing soybean and pea embryos. Arginine is also usually one of the main storage forms of nitrogen in underground storage organs and in the roots of trees and other plants. Therefore, arginine metabolism plays a key role in the distribution and recycling of nitrogen in plants.

However, arginine not only serves as an important reserve of nitrogen, but also acts as a precursor for the biosynthesis of polyamines, nitric oxide (NO), etc., and intervenes in almost all physiological and biochemical processes, in growth, development and adaptation of plants to biotic and abiotic stress. Arginine decarboxylase, arginase and nitric oxide synthase are the key enzymes in the catabolism of L-arginine, forming polyamines, while nitric oxide is formed through the Nitric Oxide Synthase (NOS) pathway. The activity of these three enzymes controls the direction of arginine metabolism. Polyamines (putrescine, spermidine and spermine) are essential for the development and stress response of plants. Embryogenesis, organogenesis, and in particular, the initiation and development of flowers, fruit set and ripening, as well as leaf senescence, require polyamines. Its role in abiotic stress tolerance and the regulation of nitrogen assimilation is well established. The accumulation of polyamines in large amounts in the cell points towards metabolic regulation functions of ammonia toxicity, NO production and the balance of organic nitrogen metabolism in the cell.

Zinc, one of the essential micronutrients and an important component of several enzymes and proteins, is only needed by plants in small amounts. However, it is crucial for their development as it plays an important role in a wide range of processes. The normal range of zinc in plant tissue is 15 to 60 ppm and between 0.10 and 2.0 ppm in the culture medium. Zinc deficiency or toxicity does not occur frequently. However, both have a negative impact on crop growth and quality and must be addressed before crop damage is irreversible. Zinc activates the enzymes responsible for the synthesis of certain proteins, participates in the formation of chlorophyll and some carbohydrates, in the conversion of starches into sugars and its presence in plant tissues helps the plant to withstand low temperatures. Furthermore, zinc is essential in the formation of auxins.

Like most micronutrients, zinc is immobile which means that symptoms of deficiency occur on new leaves and vary depending on the crop. Normally, they manifest as a variable chlorosis pattern of new leaves and necrotic spots may form on the margins or tips of the leaves. New leaves are smaller in size and often cupped upwards or distorted. The internodes are shortened, giving the plant a rosette appearance, and shoot development is poor, resulting in reduced flowering and branching.

In agriculture, the impact of various bacterial pests essentially of the gram-negative type, is verified. Gram-negative phytopathogens constitute a major threat to food crops and are responsible for a plethora of plant diseases, with devastating losses in crops such as tomatoes, peppers, potatoes, olives or rice. The means by which phytopathogenic bacteria cause diseases are as varied as the types of symptoms they cause. These phytopathogenic bacteria produce toxins or inject special proteins that cause the death of the host cells, or they produce enzymes that break down key structural components of plant cells and their walls. Most phytopathogenic bacteria belong to the following genera: *Erwinia, Pectobacterium, Pantoea, Agrobacterium, Pseudomonas, Ralstonia, Burkholderia, Acidovorax, Xanthomonas, Clavibacter, Streptomyces, Xylella, Spiroplasma* and *Phytoplasma*. Phytopathogenic bacteria cause many different types of symptoms including galls and overgrowths, wilting, leaf spot, specks and blight, soft rot, as well as scabs or cankers. Unlike viruses, which are inside host cells, covered bacteria grow in the spaces between cells and do not invade them. The bacteria that cause plant diseases spread in many ways: they can be sprinkled by rain or carried by wind, birds or insects. Bacterial diseases can also be spread by people when pruning infected fruit trees and transmitted via tools used or in pruning cuts. The genera of fungi that attack crops include, among others, the following: *Fusarium, Giberella, Rhizoctonia, Verticillium, Phytophthora, Colletotrichum, Alternaria* and *Botrytis*.

Based on the foregoing, there is a need in this technical field to develop new compositions of an organic and/or ecological nature that overcome the aforementioned drawbacks and that increase the bioavailability of the active components thereof, avoiding the use of chemical emulsifiers that may be toxic to plants or the soil and that, in parallel, stimulate the plant's own defence system.

## DESCRIPTION OF THE INVENTION

A first object of the invention is a method for producing a tryptophan and arginine inclusion complex in aqueous solution comprising the following stages:

a) mixing between 3% and 6% w/v of tryptophan in water and stirring until a dispersed mixture is produced;

b) adding between 6 and 10% w/v of arginine with respect to the total dispersed mixture produced in the previous stage;

c) heating to a temperature between 50 and 70 °C, preferably stirring at a stirring speed of between 300 and 1000 rpm and applying ultrasound with a frequency preferably comprised between 15 and 25 kHz, and more preferably between 20 and 25 HZ, until the full dissolution of the tryptophan and formation of the inclusion complex is completed; and

d) allowing it to cool until a temperature below 25 °C is reached.

A second object of the invention is a tryptophan and arginine inclusion complex in aqueous solution, comprising, by weight with respect to the total volume:

a) between 3 % and 6 % of tryptophan,

b) between 6% and 10% of arginine, and

c) between 84% and 92% of water,

and wherein said inclusion complex does not contain any chemical surfactant or emulsifier.

One of the main advantages offered by the inclusion complex object of the invention compared to other products described in the state of the art is the surprising improvement it presents in terms of the solubility of its active ingredients, tryptophan and arginine, in water. In particular, it has been shown that the claimed inclusion complex allows the solubilisation percentage of tryptophan in water to be multiplied by 20.

In addition, it provides the advantage that it is a safe product, based on natural compounds and that does not require the use of chemical compounds, as surfactants or emulsifiers, unlike other common compositions of the state of the art. It is important to note that the components of the claimed inclusion complex are generally recognised as safe (GRAS), thus favouring their use in the treatment of crops. Therefore, it is a product that respects the environment and does not harm ecosystems, due to the fact that it does not include toxic substances, based on compounds that are even human food grade.

A third object of the invention is a fertiliser, biostimulant and antimicrobial composition comprising by weight with respect to the total volume:

a) between 9% and 16% of the inclusion complex in aqueous solution object of the invention, as previously defined, and

b) between 4% and 8% of at least one chelating compound selected from a zinc chelating compound and an iron chelating compound, as well as any of the combinations thereof.

In an alternative embodiment of the invention, the fertiliser, biostimulant and antimicrobial composition may comprise, by weight with respect to the total volume:

a) between 9% and 16% of the inclusion complex in aqueous solution object of the invention, as previously defined, and

b) between 0.5% and 5% of a dry extract of red algae.

In an additional alternative embodiment of the invention, the fertiliser, biostimulant and antimicrobial composition may comprise, by weight with respect to the total volume:

a) between 9% and 16% of the inclusion complex in aqueous solution object of the invention, as previously defined,

b) between 4% and 8% of at least one chelating compound selected from a zinc chelating compound and an iron chelating compound, as well as any of the combinations thereof; and

c) between 0.5% and 5% of a dry extract of red algae.

In the context of the present invention, fertiliser is understood to mean a composition comprising essential nutrients for the growth and development of a plant. The composition object of the invention has a fertilising function due to the presence of amino acids in the composition itself. In this way, it fulfils the fertilising function *per se*, preventing the plant from having to produce nutrients from the nitrogen fixed through its roots, with the resulting economic savings that this entails. In addition, there are numerous additional benefits associated with the presence of amino acids in the composition, acting on various aspects such as resistance to stress, photosynthesis, pollination, activation of phytohormones and other growth substances, the balance of the flora in the soil and the system of absorption and translocation of microelements at the plant level.

Furthermore, in the context of the present invention, a biostimulant is understood as a substance that alters plant processes, improving their performance. In particular, the composition object of the invention has the ability to stimulate the defence system in which the auxins of plants intervene.

Moreover, antimicrobial is understood as a substance that intervenes in the protection of a plant against diseases caused by fungi and/or bacteria.

A fourth object of the invention is a method for producing a fertiliser, biostimulant and antimicrobial composition as previously described, characterised in that it comprises mixing by sonication, applying ultrasound with a frequency preferably comprised between 15 and 25 kHz, more preferably between 20 and 25 HZ, the following components:

a) between 9% and 16% by weight of the inclusion complex in aqueous solution as previously described, and

b) between 4% and 8% by weight of at least one chelating compound selected from a zinc chelating compound and an iron chelating compound, as well as any of the combinations thereof,

wherein the mixing is preferably carried out at a temperature between 50°C to 70 °C, for a period of time between 5 and 15 minutes, until a homogeneous composition is obtained.

Alternatively, said production method of a fertiliser, biostimulant and antimicrobial composition as previously described, is characterised in that it comprises mixing by sonication, applying ultrasound with a frequency preferably comprised between 15 and 25 kHz, more preferably between 20 and 25 HZ, the following components:

a) between 9% and 16% of the inclusion complex in aqueous solution object of the invention, as previously defined, and

b) between 0.5% and 5% by weight of a dry extract of red algae,

wherein the mixing is preferably carried out at a temperature between 50°C to 70 °C, for a period of time between 5 and 15 minutes, until a homogeneous composition is obtained.

In addition, the method for producing a fertilising, biostimulant and antimicrobial composition object of the invention is characterised in that it comprises mixing by sonication, applying ultrasound, the following components:

a) between 9% and 16% of the inclusion complex in aqueous solution object of the invention, as previously defined,

b) between 4% and 8% by weight of at least one chelating compound selected from a zinc chelating compound and an iron chelating compound, as well as any of the combinations thereof, and

c) between 0.5% and 5% by weight of a dry extract of red algae,

wherein the mixing is carried out at a temperature between 50°C to 70°C, for a period of time between 5 and 15 minutes, until a homogeneous composition is obtained.

A fifth object of the invention is the use of the fertiliser, biostimulant and antimicrobial composition previously described to induce auxin defence in plants of agricultural crops, forestry and/or gardening comprising applying to said crops a maximum amount of 23% by weight of the composition in water.

As described above, one of the main advantages of the invention is that it is a composition based on natural, safe and biodegradable substances while significantly improving the bioavailability of tryptophan, eliminating the presence of other essential chemical products for its dissolution such as those currently used in the agricultural sector.

In an alternative particular embodiment, the claimed composition may be used as a fertiliser.

In another alternative particular embodiment, the claimed composition may be used as a biostimulant.

Lastly, in another alternative particular embodiment, the claimed composition may be used as an antimicrobial, having the ability to prevent, treat and/or eliminate pests of microorganisms that can be fungi and/or bacteria from plants.

Particularly, pathogenic fungi may consist of a genus of fungi selected from the group consisting of *Fusarium, Giberella, Rhizoctonia, Verticillium, Phytophthora, Colletotrichum, Alternaria, Botrytis,* as well as any of the combinations thereof.

In turn, pathogenic bacteria may consist of gram-negative bacteria. Preferably, pathogenic bacteria may consist of a genus of bacteria selected from the group consisting of *Erwinia, Pectobacterium, Pantoea, Agrobacterium, Pseudomonas, Ralstonia, Burkholderia, Acidovorax, Xanthomonas, Clavibacter, Streptomyces, Xylella, Spiroplasma, Phytoplasma,* as well as any of the combinations thereof.

In any of the previously described uses, the claimed composition can be applied diluted in water by spraying on the crop, at foliar level or root level by irrigation. Preferably, its application is carried out at the foliar level, as greater absorption is achieved by the plant. Said dilution in water may comprise an amount of fertiliser, biostimulant and antimicrobial composition from 14 to 23%, more preferably between 15% and 20% and even more preferably between 18% and 20% by weight with respect to the total.

A sixth object of the invention is the aqueous dilution comprising the claimed fertiliser, biostimulant and antimicrobial composition, preferably, at a percentage by weight comprised between 14 % and 23 %, more preferably between 15% and 20% and even more preferably between 18% and 20% by weight with respect to the total.

**BRIEF DESCRIPTION OF THE FIGURES**

The present description is accompanied by a series of figures where chemical structures of the composition object of the invention are shown in an illustrative and non-limiting manner. In particular, said figures are the following:

- Figure 1.- a) Image of the structure of the resonance forms of the guanidine group; and b) average spatial structure of guanidine.
- Figure 2.- a) Molecular structure and b) conformational structure (average) of tryptophan.
- Figure 3.- a) Molecular structure and b) conformational structure (average) of arginine.
- Figure 4.- a) Molecular structure and b) conformational structure (average) of the tryptophan and arginine complex in the first study of hydrogen bond formation.
- Figure 5.- a) Molecular structure and b) conformational structure (average) of the tryptophan and arginine complex in the second study of hydrogen bond formation.
- Figure 6.- a) Molecular structure and b) conformational structure (average) of the tryptophan and arginine complex in the third study on hydrogen bond formation.
- Figure 7.- a) Molecular structure and b) conformational structure (average) of the tryptophan and arginine complex in the fourth study on hydrogen bond formation.
- Figure 8.- a) Molecular structure and b) conformational structure (average) of the tryptophan and arginine complex in the fifth study on hydrogen bond formation.
- Figure 9.- a) Molecular structure and b) conformational structure (average) of the tryptophan and arginine complex in the sixth study of hydrogen bond formation.
- Figure 10.- NMR spectra of: (a) L-Tryptophan; (b) L-Arginine and (c) Tryptophan-Arginine complex.

**DETAILED DESCRIPTION OF THE INVENTION**

As described above, the present invention provides a new process to increase the solubilisation of tryptophan in water, which has not been described to date in the technical literature. The new claimed inclusion complex increases the solubility of tryptophan in water up to 20 times and is especially indicated for its use in the preparation of natural and bioavailable fertiliser, biostimulant and antimicrobial compositions.

In particular, the developed method allows a tryptophan/arginine complex to be produced by means of a hot mixing process with the application of ultrasound. The inclusion complex produced by means of said process can be marketed in concentrated form, or it can be diluted in water up to a percentage that facilitates its use in agriculture, forestry and/or gardening.

In the context of the present invention, the formation of the complex occurs as a consequence of the loss of the proton by both carboxylic groups of the amino acids, that move, in the case of tryptophan, to the free amino group of the aliphatic part of the molecule (not the indole group) and, in the case of arginine, to the resonance structure of the guanidine group, which is positively charged.

As described above, the claimed inclusion complex is characterised in that it comprises between 3% and 6% by weight of tryptophan, although in preferred embodiments of the invention the amount of tryptophan will be 4% or 5% by weight with respect to the total volume.

In turn, the amount of arginine present in the inclusion complex is comprised between 6% and 10% by weight, although in preferred embodiments it may be present at 7%, 8% or 9% by weight with respect to the total volume.

The effectiveness of the product object of the present invention, together with its high bioavailability, makes it a truly advantageous product compared to fertilisers, biostimulants and/or antimicrobial agents known in the market, that barely dissolve 0.5% of tryptophan in water. Together with this, the claimed inclusion complex is made up of effective natural components, thus avoiding the use of chemicals responsible for toxic effects on the environment.

As described above, it should be pointed out that, thanks to the chemical composition of the claimed inclusion complex, the solubility of tryptophan has been surprisingly increased. In fact, it has been shown that the solubility of tryptophan increases with the concentration of arginine, present between 6% and 10% by weight, thus facilitating the formation of the inclusion complex between both amino acids by weak or short-range molecular interactions between the molecules of both compounds in water. In particular, said interactions consist of hydrogen bonds between the two amino acids described, in other words, that which is soluble in water and that which is insoluble. Hydrogen bonds are an electrostatic force that provide great stability, but are weaker than covalent bonds or ionic bonds. The action of ultrasound applied during the production method of the inclusion complex is essential for the appearance of these bonds.

One of the main advantages of the claimed composition is that it solves the problem that the agricultural sector must face in relation to current microbial pests, particularly in the case of bacteria, in which case the use of common antibiotics is not allowed, for human use, to prevent the emergence of resistant bacteria.

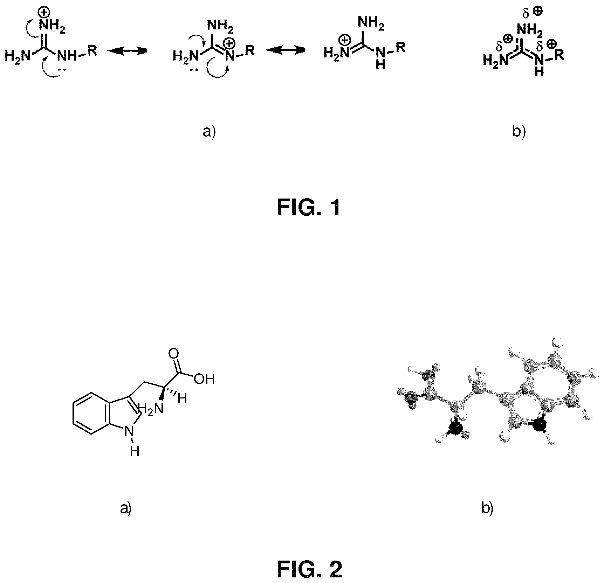

In particular embodiments of the present invention, the fertiliser, biostimulant and antimicrobial composition comprises the inclusion complex formed by the two amino acids described, giving rise to a composition in aqueous solution with a pH comprised between 8 and 11 and with a cationic nature, derived from the presence of the guanidine group of arginine, as shown in Figure 1, with a strong tendency to capture the proton of the carboxylic group of tryptophan and remain positively charged, which provides the formed complex with the cationic nature. In preferred embodiments, the pH of the aqueous solution is comprised between 9 and 10 and is more preferably between 9.3 and 9.5.

As described above, the claimed fertiliser, biostimulant and antimicrobial composition can comprise between 4 and 8% by weight of at least one chelating compound preferably selected from a zinc or iron chelating compound for agricultural application. More preferably, the zinc chelating compound that is of agricultural application may be selected from the group consisting of zinc sulphate, zinc gluconate, zinc heptagluconate, zinc acetate, zinc ethylenediaminetetraacetate (EDTA)Zn, zinc hydroxyethylenediaminetriacetate (HEEDTA)Zn, zinc diethylenetriaminepentaacetate (DTPA)Zn, zinc ethylenediamine di-ortho-hydroxy-phenyl-acetate (o,p-EDDHA)Zn, zinc ethylenediamine-disuccinate (EDDS)Zn, zinc ethylenediamine-N and N'-disuccinate (EDDS)Zn, as well as any of the combinations thereof.

In preferred embodiments of the invention, the amount of zinc chelator for agricultural application in the composition is 4.5%, 5%, 5.5%, 6%, 6.5%, 7% or 7.5% by weight with respect to the total volume.

A great advantage of the claimed inclusion complex is that it does not require the incorporation of emulsifiers or surfactants to improve its solubility and bioavailability in aqueous solution, unlike other alternative products of the state of the art, which are associated with a significant risk of toxicity in crops, as well as in soils intended for agriculture, forestry and gardening in general.

Therefore, it is a very advantageous solution compared to the compounds that currently exist in the market, since a very stable product is produced with a simple preparation of the inclusion complex, which is transported in a more elemental way than other alternatives based on oils and emulsifiers, polyelectrolytes, as well as other more complicated encapsulation products, with the resulting economic saving. Although it is known that the stability of solutions can be improved by adding a surfactant agent, the product object of the invention does not contain them in its composition due to environmental sustainability reasons.

In a preferred embodiment, the fertiliser, biostimulant and antimicrobial composition can additionally comprise at least one additive, preferably a preservative and more preferably potassium metabisulphite. Preferably, said additive will be present in an amount between 0.1% and 0.5% by weight with respect to the total fertiliser, biostimulant and antimicrobial composition. In even more preferred embodiments, the amount of additive (preferably, preservative and more preferably potassium metabisulphite) can be 0.2%, 0.3% or 0.4% by weight with respect to the total. Said additive can be added in a last stage of the process, after the formation of the inclusion complex.

Regarding the use of the claimed composition, in particular embodiments of the invention, the composition may be diluted in water for its application in agriculture, forestry and/or gardening, being able to be included in the dilution in an amount of 1%, 2%, 3%, 4%, 5%, 6%, 7%, 8% or 9% by weight with respect to the total volume of the final aqueous solution.

In preferred embodiments of the invention, the aqueous dilution can comprise between 140 and 230 grams of the composition with respect to one litre of water.

In preferred embodiments of the present invention, the fertiliser, biostimulant and antimicrobial inclusion complex allows successive dilutions of tryptophan, in other words, it allows dilutions with very large amounts of water, and has the surprising effect that the amino acids of the inclusion complex remain soluble, without precipitating in the water or without forming an isolated powder on the free surface of the liquid.

Due to the fact that the arginine forms an inclusion complex that increases the solubility of tryptophan at least 20 times over, in particular embodiments of the invention, the inclusion complex will maintain its solubility in water even in amounts of 1 litre of inclusion complex diluted in water in an amount between 50 litres and 200 litres. Surprisingly, the way in which the claimed complex does not precipitate in the mixture as the amount of water in the solution increases has been verified. This is due to the phenomenon described above, regarding the bioavailability of the inclusion complex to be able to be applied to crops and to have a greater fertilising, biostimulant and antimicrobial effect, as is the case of the present invention.

Based on what is described in the present document, it is concluded that the composition comprising the claimed inclusion complex is a fertiliser, optimal biostimulant and antimicrobial product for its application in agriculture, forestry and gardening, as shown in the experimental results carried out with said products, in which a decrease in pests of at least 90% compared to those initially existing has been observed.

As a basis for explaining this phenomenon, the present document provides a theoretical model of the formation of the inclusion complex between both amino acids, which is a preferred embodiment of the present invention. In this preferred case, the internal energy of the inclusion complex object of the invention is -952.8 kcal/mol, which is much lower than the energy content of amino acids separately, demonstrating the formation of the complex and its stability.

In particular embodiments of the present invention, the use of the claimed composition involves its application of the fertiliser, biostimulant and antimicrobial aqueous composition in a dilution in water. In a particular embodiment, 1 litre of the composition (complex concentrate) can be used for 50, 100 or even 200 litres of water, but logically, since the effect is not altered by the volume of solution, it can be applied in any of the concentrations that have been previously described.

## EXAMPLES

### 1. Production method and characterization of an inclusion complex as claimed, with tryptophan and arginine

It is based on the production of the complex between both amino acids, according to the following composition and method:

50 grams of solid powdered tryptophan amino acid is added to 1 litre of water and after 5 minutes of stirring, such that the powder is "wet" and evenly distributed in the water, 100 grams of the amino acid arginine are added under intense stirring. It is heated until it reaches a temperature of 50° to 70°C and ultrasound is applied, these conditions being necessary and sufficient for the formation of the inclusion complex in water. Both substances (tryptophan and arginine) are mixed by stirring and the resulting mixture is homogenised by directly introducing the sonicator head of the ultrasound equipment (with a frequency of 20 kHz) into the solution. Sonication is carried out for periods of 2 min each, and a total time of 10 minutes, not allowing the solution to heat above 70 °C. Once the complex is formed and stabilised, 40 grams of zinc chelator are added. The resulting solution, protected from light, changes colour until it acquires an ochre yellow colour. Subsequently, the already formed inclusion complex can be packaged. The pH of the resulting solution cannot be altered in order to avoid the formation of undesirable precipitates.

### 2. Analysis and theoretical determination of the formation of the inclusion complex

The theoretical verification of the formation of the complex is based on the study of the energy content thereof, which was calculated using ChemBio3D Ultra 16.0 software (Perkin-Elmer Inc., Waltham, MA, USA) and the Molecular Mechanics (MM2) calculation method. Calculations were made to obtain the energy of the molecular 3D structure, analysing and exposing the energy of the baseline condition. The lower the final energy, the greater the stability of the molecule. The MM2 is a method used to determine the geometry, molecular energies, vibrational spectra and enthalpies of formation of molecules in their baseline condition and is commonly used to determine the behaviour of large molecules of biological and pharmaceutical importance. It is often used to determine the geometries of large molecules, such as those of biological and pharmaceutical importance, which are beyond the reach of more intensive methods based on molecular orbitals. For this reason, MM2 is not useful for modelling transition states of chemical processes with a large spectrum of experimental steps.

Calculations were made to obtain the energy of different conformations of the same 3D complex, analysing and exposing those with lower formation energy. Different three-dimensional conformations were estimated for the formed complex. The total energy content, expressed in kcal/mol, of each molecule is described by the sum of the following interactions:

$$E_{Total} = E_{Stretching} + E_{Bending} + E_{Torsion} + E_{Non\text{-}bonded\ interaction}$$

To verify the energy content of the two amino acids separately and of the complex formed between them, their conformational structure and their interrelationship were studied by means of hydrogen bonding. The results were the following:

An energy content of 4.5 kcal/mol was obtained for tryptophan. The molecular and conformational structure of tryptophan is shown in figure 2.

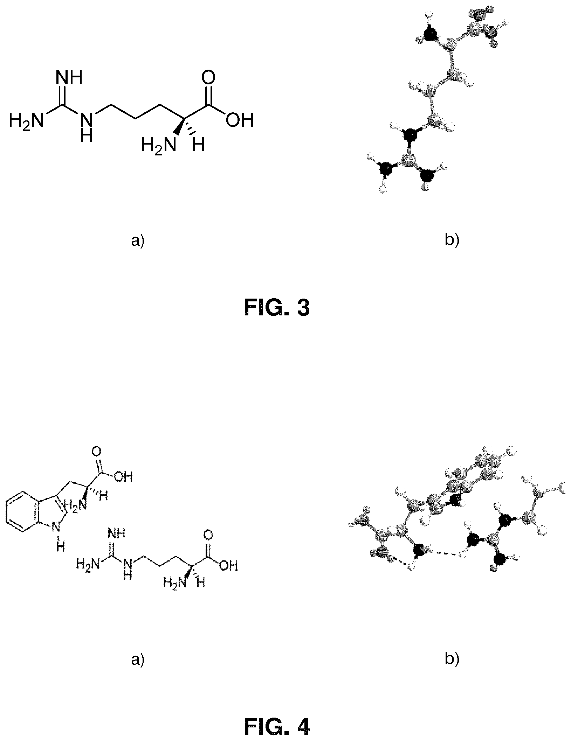

An energy content of -3.3 kcal/mol was obtained for arginine. The molecular and conformational structure of arginine is shown in figure 3.

A first study of the formation of hydrogen bonds in the tryptophan-arginine inclusion complex was carried out, obtaining an energy content of -8.4 kcal/mol. The molecular and conformational structure of the tryptophan-arginine complex of this first study are shown in Figure 4.

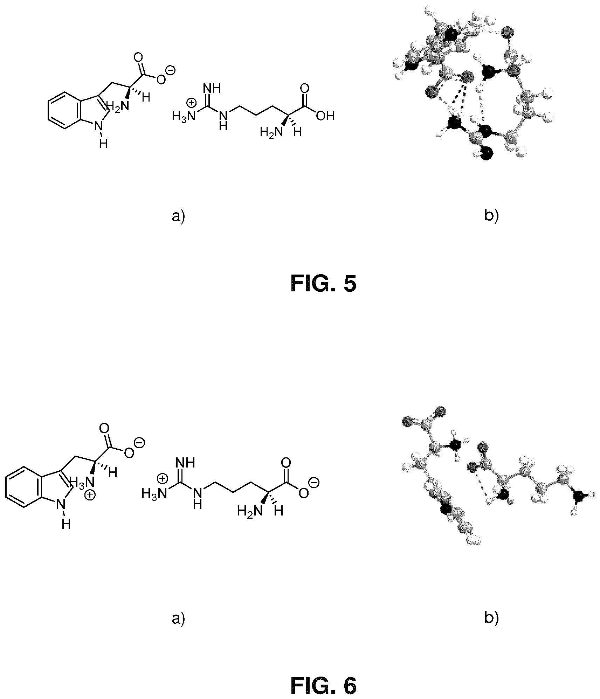

A second study of the formation of hydrogen bonds of the tryptophan-arginine inclusion complex was carried out, obtaining an energy content of - 132.2 kcal/mol. The molecular and conformational structure of the tryptophan-arginine complex of this second study are shown in Figure 5.

A third study of the formation of hydrogen bonds was carried out, obtaining an energy content of -342.7 kcal/mol. The molecular and conformational structure of the tryptophan-arginine complex of this third study are shown in Figure 6.

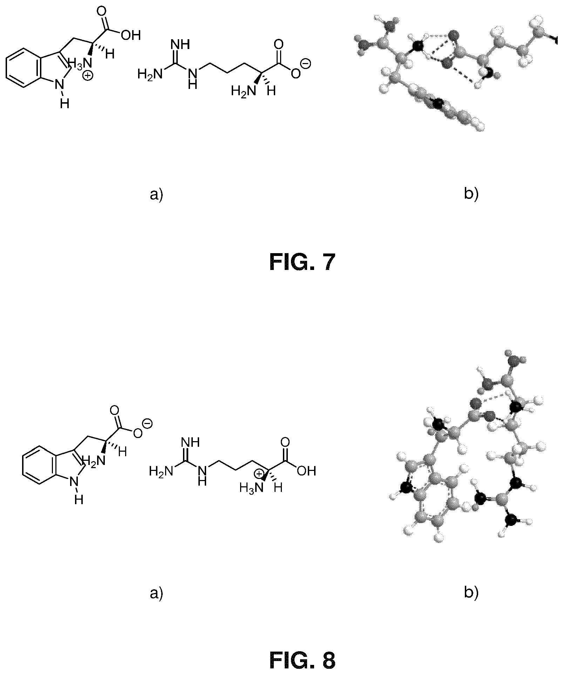

A fourth study of the formation of hydrogen bonds was carried out, obtaining an energy content of -118.5 kcal/mol. The molecular and conformational structure of the tryptophan-arginine complex of this fourth study are shown in Figure 7.

A fifth study of the formation of hydrogen bonds was carried out, obtaining an energy content of -110.6 kcal/mol.

The molecular and conformational structure of the tryptophan-arginine complex of this fifth study are shown in Figure 8.

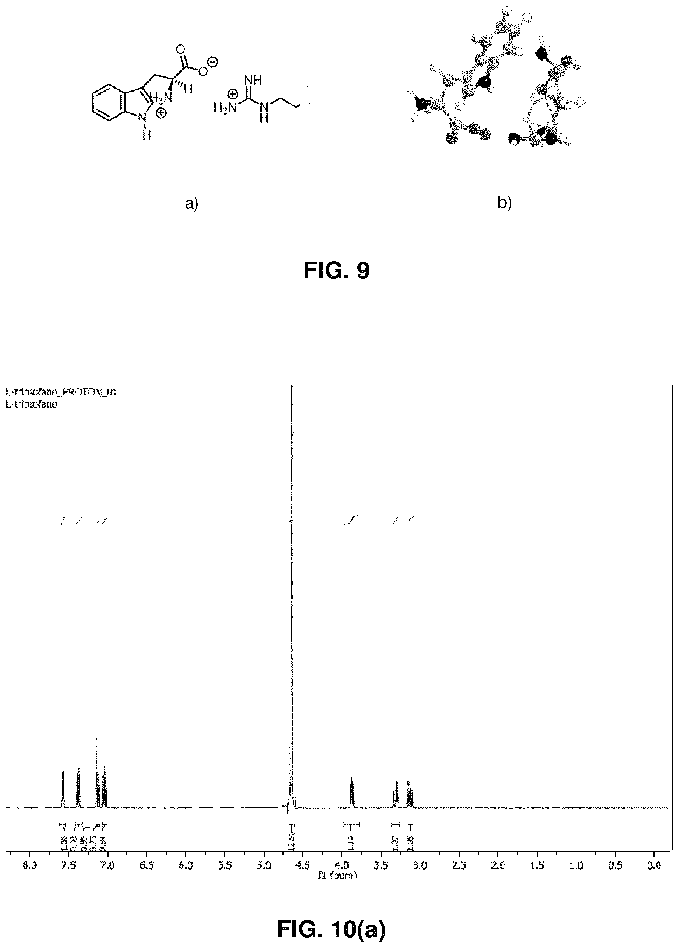

A sixth case study of the formation of hydrogen bonds was carried out, obtaining an energy content of -952.8 kcal/mol. The molecular and conformational structure of the tryptophan-arginine complex of this sixth study are shown in Figure 9.

From the energetic study of the different formation possibilities of the complex between tryptophan and arginine by means of hydrogen bonding, it is concluded that the fifth study is the most favourable energetically and therefore it is the one that takes place, since the protonation of the guanidine group of arginine and the free amino group of tryptophan takes place, through the transfer of protons from the carboxylic groups present in both amino acids.

3. *Use of the aqueous solutions of the complex described in Example 1 and of the results obtained as an antimicrobial compound.*

A summary of the results obtained in the *in vitro* tests with various microorganisms is provided in this patent application that have been carried out in the CSIC facilities, specifically in the IPNA-CSIC.

To determine the antimicrobial capacity, the following test was carried out: the inclusion complex was synthesized in 100 ml of water as described in Example 1. Subsequently, an analysis of its antimicrobial capacity in *Cándida albicans, Campilobacter jejuni, Escherichia coli, Pseudomonas aeruginosa, Staphiloccocus aureus* and *Salmonella entérica,* determining the degree of growth and inhibition in different consecutive dilutions, at 1/2, 1/4, and successively up to 1/32. These values are made explicit in the following Table 1, where the first value corresponds to the percentage of growth and the second value with the percentage of inhibition, being complementary:

**Table 1**

| Degree of dilution/ Organism analysed | 1 | 1/2 | 1/4 | 1/8 | 1/16 | 1/32 |
|---|---|---|---|---|---|---|
| *Cándida albicans* | 0/100 | 0.31/ 99.69 | 2.74/ 97.26 | 14.82/ 85.18 | 100/0 | 100/0 |
| *Campilobacter jejuni* | 0/100 | 8.83/ 91.17 | 9.1/ 90.9 | 10.2/ 89.8 | 14.8/ 85.2 | 20.72/ 79.28 |
| *Escherichia coli* | 0/100 | 0/100 | 0.62/ 99.38 | 0.65/ 99.35 | 0.72/ 99.28 | 50.41/ 49.59 |
| *Pseudomonas Aeruginosa* | 0/100 | 1.82/ 98.18 | 0.43/ 99.57 | 0.72/ 99.28 | 74.12/ 25.88 | 87.18/ 12.82 |
| *Staphiloccocus aureus* | 0/100 | 0.16/ 99.84 | 3.68/ 96.32 | 6.58/ 93.42 | 50.46/ 49.54 | 65.33/ 34.67 |
| *Salmonella entérica* | 0/100 | 0/100 | 0/100 | 0/100 | 0/100 | 60.39/ 39.61 |

4. *Determining NMR spectra*

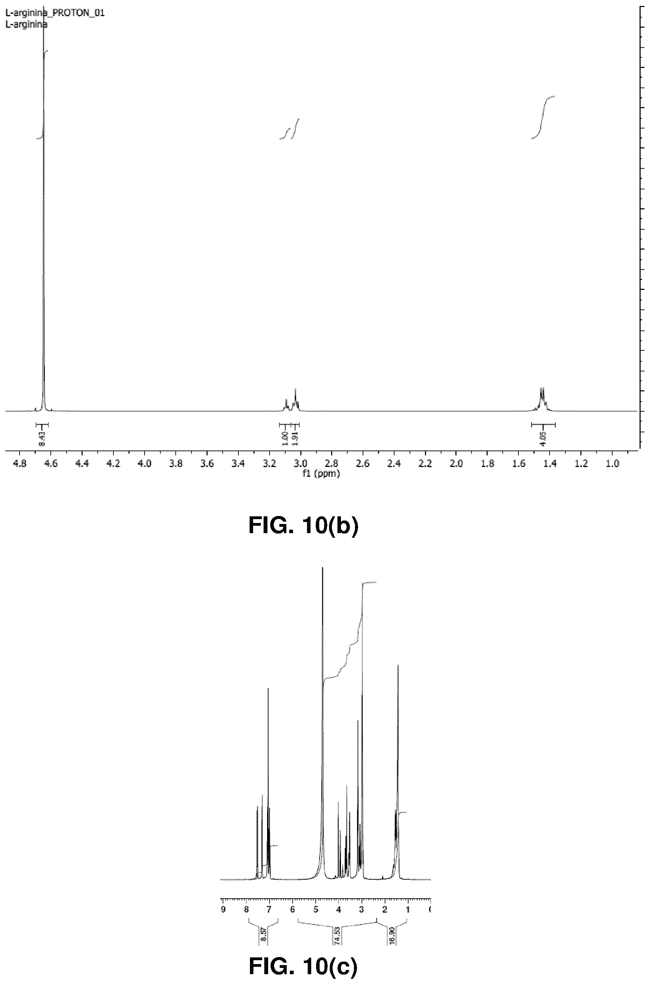

In order to demonstrate the formation of the claimed inclusion complex, the NMR spectra of the two independent amino acids (tryptophan and arginine) were performed, which were compared with the NMR spectrum of the tryptophan-arginine complex. The results of the electrophoresis are shown in Figure 10.

In particular, Figure 10(a) shows the NMR spectrum of L-Tryptophan, Figure 10(b) shows the NMR spectrum of L-Arginine and Figure 10(c) shows the NMR spectrum of the complex-Tryptophan/L-Arginine. Said figure 10(c) shows an important difference in the geometry and height of the peaks with respect to the spectra of the amino acids separately, indicating the presence of the inclusion complex, confirming the results of the energy studies carried out (example 2).

**Claims**

1. A method for producing a tryptophan and arginine inclusion complex in aqueous solution comprising the following stages:

a) mixing between 3% and 6% w/v of tryptophan in water and stirring until a dispersed mixture is produced;
b) adding between 6 and 10% w/v of arginine with respect to the total dispersed mixture produced in the previous stage;
c) heating to a temperature between 50 and 70 °C, stirring and applying ultrasound until the full dissolution of the tryptophan and formation of the inclusion complex is completed; and
d) allowing it to cool until a temperature below 25 °C is reached.

2. The method according to claim 1, wherein ultrasound is applied with a frequency comprised between 15 and 25 kHz.

3. A tryptophan and arginine inclusion complex in aqueous solution produced by means of the method described in claim 1 or 2, **characterised in that** it comprises, by weight with respect to the total volume:

   a) between 3 % and 6 % of tryptophan,
   b) between 6% and 10% of arginine, and
   c) between 84% and 92% of water,

and wherein said inclusion complex does not contain any chemical surfactant or emulsifier.

4. A fertiliser, biostimulant and antimicrobial composition, **characterised in that** it comprises, by weight with respect to the total volume:

   a) between 9% and 16% of the inclusion complex in aqueous solution as defined in claim 3, and
   b) between 4% and 8% of at least one chelating compound selected from a zinc chelating compound and an iron chelating compound, as well as any of the combinations thereof.

5. The fertiliser, biostimulant and antimicrobial composition according to claim 4, wherein the zinc chelating agent is selected from the group consisting of zinc sulphate, zinc gluconate, zinc heptagluconate, zinc acetate, zinc ethylenediaminetetraacetate (EDTA)Zn, zinc hydroxyethylenediaminetriacetate (HEEDTA)Zn, zinc diethylenetriaminepentaacetate (DTPA)Zn, zinc ethylenediamine di-ortho-hydroxy-phenyl-acetate (o,p-EDDHA)Zn, zinc ethylenediamine-disuccinate (EDDS)Zn, zinc ethylenediamine-N and N'-disuccinate (EDDS)Zn, as well as any of the combinations thereof.

6. A fertiliser, biostimulant and antimicrobial composition, **characterised in that** it comprises, by weight with respect to the total volume:

   a) between 9% and 16% of the inclusion complex in aqueous solution as defined in claim 3, and
   b) between 0.5% and 5% of a dry extract of red algae.

7. The fertiliser, biostimulant and antimicrobial composition comprising, by weight with respect to the total volume:

   a) between 9% and 16% of the inclusion complex in aqueous solution as defined in claim 3,
   b) between 4% and 8% of at least one chelating compound selected from a zinc chelating compound and an iron chelating compound, as well as any of the combinations thereof; and
   c) between 0.5% and 5% of a dry extract of red algae.

8. The fertiliser, biostimulant and antimicrobial composition according to any one of claims 4 to 7, wherein the composition additionally comprises potassium metabisulphite in an amount comprised between 0.1 to 0.5% by weight with respect to the total composition.

9. The method for producing a fertiliser, biostimulant and antimicrobial composition as described in claims 4, 5 or 8, **characterised in that** it comprises mixing by sonication, applying ultrasound, the following components:

   a) between 9% and 16% by weight of the inclusion complex in aqueous solution as defined in claim 3, and
   b) between 4% and 8% by weight of at least one chelating compound selected from a zinc chelating compound and an iron chelating compound, as well as any combination thereof,

wherein the mixing is carried out at a temperature between 50° to 70°C, for a period of time between 5 and 15 minutes, until a homogeneous composition is obtained.

10. The method for producing a fertiliser, biostimulant and antimicrobial composition as described in claim 6, **characterised in that** it comprises mixing by sonication, applying ultrasound, the following components:

   a) between 9% and 16% of the inclusion complex as defined in claim 3, and
   b) between 0.5% and 5% by weight of a dry extract of red algae,

wherein the mixing is carried out at a temperature between 50° to 70°C, for a period of time between 5 and 15 minutes, until a homogeneous composition is obtained.

11. The method for producing a fertiliser, biostimulant and antimicrobial composition as described in claim 7, **characterised in that** it comprises mixing by sonication, applying ultrasound, the following components:

   a) between 9% and 16% of the inclusion complex as defined in claim 3,
   b) between 4% and 8% by weight of at least chelating compound selected from a zinc chelating compound and an iron chelating compound, as well as any of the combinations thereof, and
   c) between 0.5% and 5% by weight of a dry extract of red algae,

wherein the mixing is carried out at a temperature between 50° to 70°C, for a period of time between 5 and 15 minutes, until a homogeneous composition is obtained.

12. The method according to any one of claims 9 to 11, wherein ultrasound is applied with a frequency comprised between 15 and 25 kHz.

13. A use of the fertiliser, biostimulant and antimicrobial composition as claimed in any one of claims 4 to 8, to induce auxin defence in plants of agricultural crops, forestry and/or gardening.

14. The use of the fertiliser, biostimulant and antimicrobial composition as claimed in any one of claims 4 to 8 as a fertiliser.

15. The use of the fertiliser, biostimulant and antimicrobial composition as claimed in any one of claims 4 to 8 as a biostimulant.

16. The use of the fertiliser, biostimulant and antimicrobial composition as claimed in any one of claims 4 to 8 as an antimicrobial.

17. The use of the fertiliser, biostimulant and antimicrobial composition as claimed in any one of claims 13 to 16, **characterised in that** it comprises applying the composition diluted in water, wherein the percentage by weight of the composition in the aqueous dilution is comprised between 14 and 23% by weight.

18. An aqueous dilution **characterised in that** it comprises between 14% and 23% by weight of the fertiliser, biostimulant and antimicrobial composition as claimed in any one of claims 4 to 8.

a)

b)

FIG. 1

a)

b)

FIG. 2

a)                                b)

**FIG. 3**

a)                                b)

**FIG. 4**

a)

b)

FIG. 5

a)

b)

FIG. 6

a)

b)

FIG. 7

a)

b)

FIG. 8

a)                                                    b)

FIG. 9

L-triptofano_PROTON_01
L-triptofano

FIG. 10(a)

L-arginina_PROTON_01
L-arginina

## FIG. 10(b)

## FIG. 10(c)

## INTERNATIONAL SEARCH REPORT

International application No.

PCT/ES2023/070256

### A. CLASSIFICATION OF SUBJECT MATTER

See extra sheet

According to International Patent Classification (IPC) or to both national classification and IPC

### B. FIELDS SEARCHED

Minimum documentation searched (classification system followed by classification symbols)

A01N

Documentation searched other than minimum documentation to the extent that such documents are included in the fields searched

Electronic data base consulted during the international search (name of data base and, where practicable, search terms used)

EPODOC, INVENES, WPI, TXT-DB, NPL, XPESP, CAS

### C. DOCUMENTS CONSIDERED TO BE RELEVANT

| Category* | Citation of document, with indication, where appropriate, of the relevant passages | Relevant to claim No. |
|---|---|---|
| A | CN 107827559 A (YANHE XINYAN ECOLOGICAL AGRICULTURE AND ANIMAL HUSBANDRY CO LTD) 23/03/2018, Paragraphs 9-21; examples 1-3. | 1-18 |
| A | EP 3987931 A1 (UNIV VALLADOLID) 27/04/2022, paragraphs 12-15; page 10, line 20; claims 1-15. | 1-18 |
| A | US 2018343860 A1 (SHIROTAKE SHOICHI) 06/12/2018, paragraphs 4-30; claims 1-5. | 1-18 |
| A | WO 2018164487 A1 (CJ CHEILJEDANG CORP) 13/09/2018, claims 1-7. | 1-18 |

☐ Further documents are listed in the continuation of Box C.　　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 23/06/2023 | **(14/07/2023)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | N. Martín Laso Telephone No. 913493278 |

Form PCT/ISA/210 (second sheet) (July 2022)

## INTERNATIONAL SEARCH REPORT

Information on patent family members

International application No.

PCT/ES2023/070256

| Patent document cited in the search report | Publication date | Patent family member(s) | Publication date |
|---|---|---|---|
| CN107827559 A | 23.03.2018 | NONE | |
| EP3987931 A1 | 27.04.2022 | WO2021123480 A1<br>ES2834732 A1<br>ES2834732 B2 | 24.06.2021<br>18.06.2021<br>24.03.2022 |
| US2018343860 A1 | 06.12.2018 | US11019817 B2<br>WO2017033272 A1 | 01.06.2021<br>02.03.2017 |
| WO2018164487 A1 | 13.09.2018 | KR20180103217 A | 19.09.2018 |

Form PCT/ISA/210 (patent family annex) (July 2022)

## INTERNATIONAL SEARCH REPORT

International application No.

PCT/ES2023/070256

CLASSIFICATION OF SUBJECT MATTER

*A01N37/50* (2006.01)
*A01N43/38* (2006.01)
*A01N37/44* (2006.01)

Form PCT/ISA/210 (extra sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROUT, G.R.** Effect of auxins on adventitious root development from single node cuttings of Camellia sinensis (L.) Kuntze and associated biochemical changes. *Plant Growth Regulation*, 2006, vol. 48 (2), 111-117